Europäisches Patentamt

European Patent Office

Office européen des brevets

(11) Numéro de publication : **0 576 584 B1**

(12) **FASCICULE DE BREVET EUROPEEN**

(45) Date de publication du fascicule du brevet :
08.02.95 Bulletin 95/06

(51) Int. Cl.⁶ : **G06T 5/20**

(21) Numéro de dépôt : **92909050.4**

(22) Date de dépôt : **19.03.92**

(86) Numéro de dépôt international :
**PCT/FR92/00247**

(87) Numéro de publication internationale :
**WO 92/16908 01.10.92 Gazette 92/25**

(54) **PROCEDE DE TRAITEMENT D'IMAGES PAR FILES D'ATTENTE HIERARCHISEES.**

(30) Priorité : **20.03.91 FR 9103384**

(43) Date de publication de la demande :
**05.01.94 Bulletin 94/01**

(45) Mention de la délivrance du brevet :
**08.02.95 Bulletin 95/06**

(84) Etats contractants désignés :
**DE FR GB**

(56) Documents cités :
**PATENT ABSTRACT OF JAPAN VOL. 12, NO. 425 (E-681) (3272) 10 NOVEMBRE 1988 & JP-A-63164575**
**IEEE TRANSACTIONS ON PATTERN ANALY-SIS & MACHINE INTELLIGENCE VOL. 11, NO. 4, APRIL 1989, PAGES 425-429; BEN J.H. VERWER ET AL.: "AN EFFICIENT UNIFORM COST ALGORITHM APPLIED TO DISTANCE TRANSFORMS"**

(73) Titulaire : **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75006 Paris (FR)**

(72) Inventeur : **MEYER, Fernand**
**61, avenue de Fontainebleau**
**F-77250 Veneux-les-Sablons (FR)**

(74) Mandataire : **Schmit, Christian Norbert Marie**
**Cabinet Ballot-Schmit**
**7, rue Le Sueur**
**F-75116 Paris (FR)**

EP 0 576 584 B1

## Description

La présente invention a pour objet un procédé de traitement d'images avec utilisation de files d'attente hiérarchisées. Elle concerne plus particulièrement la segmentation des images, c'est-à-dire la reconnaissance dans une image de certaines formes dont les contours, notamment du fait du bruit d'image, paraissent peu précis, et le filtrage, c'est à dire l'élimination de bruit. Elle est utilisable dans tous les secteurs de l'analyse d'images, en particulier dans le domaine médical, dans l'analyse des images acquises par des tomographes, que ces images soient des images à deux dimensions, à trois dimensions, ou même qu'elles incorporent comme quatrième dimension le temps. La méthode est par ailleurs généralisable à de multiples dimensions ainsi qu'à des images couleur. Le procédé de l'invention peut également trouver son application dans le domaine du contrôle du trafic, pour la détection des véhicules et de la chaussée, et plus généralement dans tous les domaines de la vision industrielle. Il peut enfin constituer une part essentielle dans des opérations de codage et de compression d'image en vue de télécommunications ou d'archivage.

Les deux problèmes essentiels à résoudre en traitement d'images sont d'une part la simplification d'images afin d'en extraire les traits majeurs ou d'en éliminer le bruit, ainsi que l'extraction de contours pertinents des objets qu'on désire soumettre à des mesures. Des solutions classiques à ces problèmes existent et sont fondées sur les techniques de la morphologie mathématique, décrites par exemple dans le livre de J.Serra, "Image analysis and mathematical morphology", tomes 1 (1982) et 2 (1988), Academic Press. Les images sont soumises à des transformations de voisinage, telles que l'érosion et la dilatation.

On rappelle que le traitement avec de tels opérateurs revient à qualifier, en chaque point d'image une valeur d'un paramètre d'image, en fonction de valeurs de paramètres d'image, en principe les mêmes, en des points voisins de ce point d'image. Ainsi, pour une image à deux dimensions de type télévision, on explore avec une fenêtre d'analyse tous les points d'une ligne et toutes les lignes les unes après les autres, et on attribue à un point situé au centre de la fenêtre un paramètre d'image, par exemple une luminosité, calculée selon une fonction mathématique, par exemple la valeur minimale, rencontrée dans la fenêtre, des autres points contenus dans la fenêtre. Normalement ces transformations sont entreprises itérativement. A chaque itération il y a création d'une image nouvelle, se rapprochant de plus en plus de l'image finale désirée. On arrête l'algorithme lorsqu'une itération nouvelle ne change plus rien au résultat de la transformation.

Le principal inconvénient de ces transformations est leur lenteur, lorsqu'elles ont exécutées sur un ordinateur conventionnel. Pour y remédier, un dispositif câblé a été décrit dans le brevet français FR-A- 2 317 645 déposé le 11 juillet 1975 sous le numéro 75 21925. En l'absence d'un tel dispositif câblé, on peut accélérer le traitement en ayant recours à des transformations séquentielles d'images. On connaît par exemple, par le brevet français 2 586 120, déposé le 7 août 1985 sous le numéro 85 12120, un procédé et un dispositif de transformations séquentielles d'images. Le perfectionnement séquentiel a pour objet d'incorporer dans la fenêtre d'exploration des points d'image appartenant à l'image à traiter, et des points d'image qui viennent d'être traités juste avant le point d'image sur lequel la fenêtre est maintenant centrée. Cette technique séquentielle permet de réduire le nombre d'itérations mais nécessite cependant, pour des raisons de cohérence, d'être effectuée au moins une deuxième fois, en explorant l'image dans un sens inverse au premier sens d'exploration.

Compte tenu du nombre de points d'image à traiter, en particulier lorsque la résolution est de l'ordre de 1024 points par 1024 points, ou bien pour des images tridimensionnelles, ou encore pour des successions d'image à coder et à transmettre rapidement en télécommunication, un tel algorithme de traitement est encore trop long. On montrera qu'avec l'invention on peut obtenir un gain de vitesse de l'ordre de 2 au moins sur le traitement, et le plus souvent bien plus, à puissance de machine égale. Pour l'essentiel dans ces traitements de type séquentiel tous les points d'image sont au moins lus et traités deux fois au cours du traitement, alors qu'on montrera qu'avec l'invention les points d'image ne sont lus qu'une seule fois.

Par ailleurs on connaît, par un article dû à Messieurs J.H. WERWER et al paru le 4 avril 1989 dans la revue IEEE TRANSACTIONS ON PATTERN ANALYSIS AND MACHINE INTELLIGENCE, Vol. 2, n°4, page 425 et suivantes, un procédé de traitement avec files d'attente. Les éléments à traiter sont stockés dans des files d'attente ou baquets ayant chacun un niveau de priorité. Les adresses des éléments sont rangées dans les baquets correspondant à leur niveau de priorité. Le premier élément d'image à traiter est celui qui se trouve en premier dans le baquet le plus prioritaire. Ce procédé de traitement s'adresse à des images binaires et considère tous les points se trouvant dans un voisinage donné du point courant ; ces points sont rangés dans les baquets correspondant à leur niveau de priorité, déterminé selon leur distance au point central. De plus, selon ce document, page 426, première colonne, ligne 10, l'ordre de traitement des éléments à l'intérieur d'un baquet est sans importance.

Dans l'invention par contre, on peut traiter des images à niveaux de gris et non pas seulement binaires. Pour un point donné, on considère ses voisins: ces points sont rangés dans les files d'attente, non pas en fonction de leur distance au point central, mais en fonction de la répartition des niveaux de gris dans leur voisinage. Le niveau de gris représente en terme de luminosité, la valeur d'un paramètre d'image. Le nombre de files d'attente est déterminé par la répartition des valeurs des paramètres d'image et non pas par la géométrie de la grille de numérisation de l'image. Et, pour chaque file d'attente, les points doivent être traités dans leur ordre d'arrivée, et non pas dans un ordre indifférent.

L'invention a en effet pour objet essentiel d'imposer un ordre de traitement entre les points permettant à un point d'être traité au moment précis où il prend sa valeur définitive. Pour obtenir le même résultat, par exemple une ligne de partage des eaux, les autres procédés font prendre à chaque point plusieurs valeurs successives au cours du traitement avant de leur conférer une valeur définitive. La file d'attente hiérarchisée de l'invention a plusieurs avantages: elle introduit cet ordre de traitement naturellement, en particulier sur des plateaux d'altitude constante de l'image, et elle est moins exigeante en terme de volume de la mémoire de travail à mettre en oeuvre.

L'invention ayant pour objet un procédé de traitement d'une image, il convient de définir ce qu'on entend par image : une image est définie, dans une mémoire d'image d'un système informatique, comme une collection de points d'images, pixels, voxels, noeuds d'un graphe ou autres, auxquels sont affectés, pour chacun, au moins une valeur d'un paramètre de cette image, une adresse représentant la place de ce point d'image dans cette image, et la liste de tous ses voisins. Le paramètre représente une grandeur physique d'un corps, l'adresse correspond à un lieu dans le corps, la liste des voisins étant toujours semblable à elle-même lorsque les points images sont disposés sur une grille régulière, mais pouvant ne pas l'être lorsqu'il s'agit de noeuds d'un graphe, de pièces d'un puzzle, de régions géographiques. Pour connaître les voisins d'un point, on peut procéder de diverses manières. D'une façon classique les voisins d'un point dans l'image sont des points dont au moins un des termes de l'adresse est différent d'une unité du terme correspondant de l'adresse de ce point, ou même plus généralement d'un nombre prédéterminé d'unités, supérieur ou égal à deux (dépendant de la taille du voisinage que l'on veut considérer). D'une autre manière, si la notion d'adresse n'est pas simple, par exemple quand on considère des Etats sur une carte du monde, on peut déterminer par avance le voisinage de chaque point, de chaque Etat, en associant à chaque point une liste de ses voisins. Par exemple les voisins de la France sont l'Espagne, l'Italie, la Suisse, l'Allemagne, le Luxembourg, et la Belgique; dans le même exemple l'Angleterre n'aurait pas de voisin. Plutôt que de déterminer cette liste de voisinage par avance, on peut aussi la déterminer au vu de l'image elle-même, dans une phase préliminaire. Ainsi, pour une population de cellules sur une plaquette d'histologie, on peut repérer le centre d'une première cellule et celui d'une deuxième. On peut tracer un cercle qui a ces deux centres comme extrémité de diamètre. Et on peut ensuite vérifier qu'aucune autre cellule n'est comprise dans ce cercle. Si c'est le cas on dit que la deuxième cellule est voisine de la première (et vice versa), on l'ajoute à la liste et on étudie une autre deuxième cellule. Si ce n'est pas le cas on étudie une autre deuxième cellule. Les images, où le paramètre représente une grandeur physique d'un corps, seront appelées dans la suite images physiques.

Nous utiliserons aussi des images particulières, dites images marqueurs, où le paramètre d'image ne représente pas une grandeur physique d'un corps mais désigne par des labels des classes d'appartenance de certains points d'image à une région d'intérêt particulier. La détermination des marqueurs peut se faire de plusieurs manières. Par exemple un opérateur regarde une image brute, correspondant à la visualisation directe des valeurs d'image sur un écran. Cette image est bruitée. Sur cette image il distingue néanmoins des grandes masses surfaciques parce que ces masses ont, soit la même luminosité, soit un même contraste, soit au contraire une même variation de luminosité, ou tout autre caractère de cohérence. Il est donc possible à cet opérateur, au moyen d'une boule de manoeuvre, d'une souris, ou même d'un crayon optique de venir pointer sur cet écran des points d'image situés au milieu de ces grandes masses surfaciques et leur attribuer ainsi, dans une mémoire d'image marqueurs, un qualificatif particulier représentant sa classe d'appartenance. Un chirurgien peut ainsi pointer les différentes métastases cancéreuses visibles dans une coupe scanner du cerveau, avant que la machine fasse l'extraction automatique des contours de cette tumeur. L'observation de l'image plutôt que d'être effectuée par un opérateur peut-être automatique et le résultat d'un traitement préalable de l'image. On peut considérer par exemple comme marqueurs les minima régionaux de l'image, c'est à dire tous les plateaux d'altitude constante de l'image, dont tous les voisins sont d'altitude plus élevés. On peut citer aussi le cas des images de scènes en mouvement, où il arrive souvent que les résultats de la segmentation opérée sur l'image correspondant à un instant t, fournisse les marqueurs pour le traitement à un instant t+1. D'autres procédés de marquage automatique sont également envisageables. Ils sont connus par ailleurs (voir par exemple un article de F.Meyer et al, "Morphological Segmentation", Journal of Visual Communication and Image Representation, Vol.1, No.1, Septembre 1990, pp.21-46).

Il est clair que le mode de représentation de l'image marqueur importe guère. Il peut s'agir, dans la mémoire d'un système informatique, d'une image séparée de l'image physique, ou bien d'une suite de bits supplémentaires ajoutée à la fin des mots mémoires représentant chaque point de l'image physique.

L'invention a pour objet un procédé de traitement d'un couple d'images constitué d'une image physique et d'une image marqueur. Le résultat du traitement sera une nouvelle image, appelée image résultat. En chaque point x du corps physique sont ainsi définis plusieurs paramètres scalaires ou vectoriels : un paramètre physique, un paramètre marqueur et un paramètre résultat. L'ensemble des valeurs prises par ces paramètres en un point x constitue un vecteur appelé vecteur image au point x.

Le vecteur image en un point x est modifié lorsqu'une de ses composantes au moins est modifié. Nous appellerons d'autre part fenêtre d'image au point x l'ensemble des vecteurs d'images du point x et de ses voisins dans un voisinage déterminé. La fenêtre d'image en un point est modifiée lorsqu'un des vecteurs d'un point d'image la constituant est modifié.

L'invention a pour objet un procédé de traitement d'une image tel que revendiqué dans la revendication 1.

L'exploitation de l'image ainsi traitée peut prendre ensuite toute forme : visualisation, mesure statistique ou déclenchement d'une alarme ou d'une action par exemple. L'ordre des opérations de la deuxième étape n'est pas nécessairement celui apparaissant dans la liste des opération de cette étape. Quand on dit qu'une nouvelle fenêtre de x est calculée on entend que l'un quelconque des paramètre de x est modifié : son paramètre physique, marqueur ou résultat, ou bien encore celui ou ceux d'au moins un de ses voisins. On remarquera que l'invention permet de produire l'image résultat sans retour en arrière : le calcul du paramètre résultat en un point ne se fait que lorsque la fenêtre d'image de ce point le permet. En effet, durant la phase de traitement on ne traite que les points qui ont été stockés dans la FAH, et l'étape 2 garantit qu'on ne remet jamais dans la FAH un point qui y aurait été mis antérieurement durant la phase de traitement. Il n'est par contre pas exclu que la phase de traitement remette dans la FAH un point déjà mis durant la phase d'initialisation, mais avec une priorité différente. Le coeur de l'invention est constitué par l'utilisation de files d'attente hiérarchiques qui à tout moment stockent les adresses des points frontières des parties de l'image pour lesquelles le résultat est déjà connu et qui présentent chaque point au traitement au moment où l'état de sa fenêtre d'image rend ce traitement possible.

L'invention sera mieux comprise à la lecture qui suit et à l'examen des figures qui l'accompagnent. Celles-ci ne sont données qu'à titre indicatif et nullement limitatif de l'invention. Les figures montrent :

- Figure 1 : une représentation schématique d'un système informatique utilisable pour mettre en oeuvre le procédé de l'invention ;
- Figure 2a : une représentation en perspective d'une ligne de partage des eaux dans une application d'hydrologie;
- Figure 2b : l'image marqueur correspondant à la figure 2a ;
- Figures 3a à 3h : un exemple de mise en oeuvre de l'invention dans la construction de la ligne de partage des eaux pour une image simple monodimensionnelle ;
- Figures 4a à 4l : un exemple de mise en oeuvre de l'invention dans la construction d'une ligne de partage des eaux ;
- Figures 5a à 5h : un exemple de mise en oeuvre de l'invention, dans la détermination de la surface d'un emballage d'une image simple monodimensionnelle ;

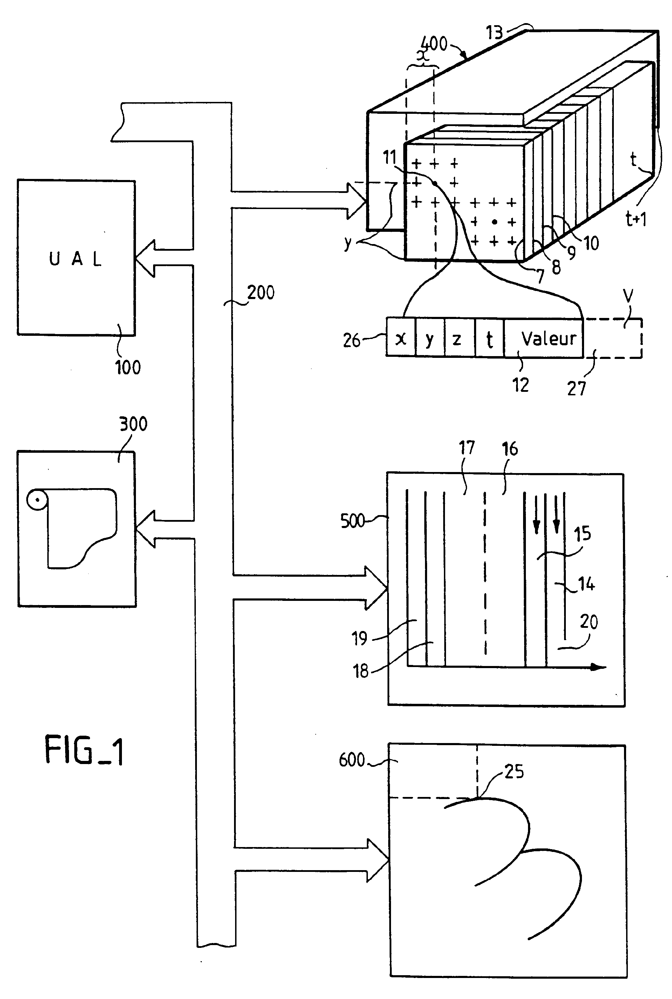

La figure 1 montre un système utilisable pour la mise en oeuvre du procédé de traitement d'images selon l'invention. Ce système, de type informatique, comporte un processeur 100, ou unité arithmétique et logique, relié par un bus 200 d'adresses et de données d'une part à une mémoire programme 300 contenant les instructions d'un programme informatique représentatif du procédé de l'invention, d'autre part à une mémoire d'image 400, à une mémoire auxiliaire 500 - 5′, et enfin à une mémoire de résultat 600, ou mémoire de visualisation. La mémoire 600 peut servir pour montrer l'image traitée sur un moniteur de télévision non représenté. La représentation différenciée des mémoires programme, image, auxiliaire et de résultat ou visualisation n'est indiquée ici que pour permettre une meilleure compréhension de l'invention. En pratique, au moment de l'exécution du traitement les informations nécessaires sont chargées dans une mémoire de travail du système au fur et à mesure du besoin.

La mémoire d'image 400 est symboliquement représentée en pages telles que 7 à 10 montrant que des points d'image, tels que 11 dont les adresses sont x et y, peuvent avoir une autre adresse z permettant de définir un corps physique à trois dimensions. L'image stockée dans la mémoire 400 est censée représenter le corps en question. A chaque point d'image d'adresse x, y, z dans la mémoire, représentant un lieu (qu'on supposera dans la suite de cet exposé de coordonnées X Y Z liées à x y z), on affecte une valeur 12 représentative d'une grandeur physique du corps. On dit qu'on fait l'image de cette grandeur. Souvent cette grandeur physique est une grandeur mesurée. Pour tenir compte de l'évolution dans le temps de l'image, on a représenté en un volume décalé 13, les informations relatives à un instant t+1 des mêmes points d'image que ceux à un instant t. Dans ce cas, à chaque point d'image on affecte en plus comme adresse un quatrième terme d'adresse t représentatif du temps. Dans la suite de l'exposé on admettra que l'invention est généralisable à un espace vectoriel à plusieurs dimensions, notamment quand la valeur représentée 12 est synonyme de plusieurs grandeurs physiques indépendantes ou en combinaison: la valeur 12 est le paramètre de l'image physique. Dans la mémoire 400 est stockée également l'image marqueur, ayant la même extension spatiale et temporelle, ou autre, que l'image physique, mais où certains points d'image possèdent une valeur particulière indiquant leur classe d'appartenance.

Dans l'invention on crée, dans la mémoire auxiliaire 500, un groupe hiérarchisé de files d'attente telles que 14 à 19. Elles sont du type premier entré premier sorti. Ceci signifie que si dans la mémoire 500, par exemple dans la file d'attente 14, on place les unes derrière les autres une série d'adresses de points d'image, le premier point d'image qui sera traité sera, dans cette série, le premier qui aura été introduit. On sait avec des automates logiciels ou matériels gérer de telle files d'attente dont le principe diffère de celui des piles. Dans ce but la file d'attente 14 comporte à sa base, symboliquement, une ouverture 20 par laquelle on prélève l'adresse la plus prioritaire. Les files d'attente sont remplies par le dessus. Ces files d'attente sont repérées par un ordre prioritaire croissant de la gauche vers la droite sur la figure 1. Ceci signifie que tous les points d'image dont les adresses sont stockées dans la file 14 doivent être traités avant ceux qui sont placés dans la file 15, et ainsi de suite ceux de la file 18 avant ceux de la dernière file 19. La file d'attente 14 est celle qui est placée au sommet de la hiérarchie. La file d'attente 19 est celle qui en est placée à la base. Ces files d'attente sont ainsi dites hiérarchisées et, par la suite, on appellera l'ensemble des files d'attente FAH, pour Files d'Attente Hiérarchisées.

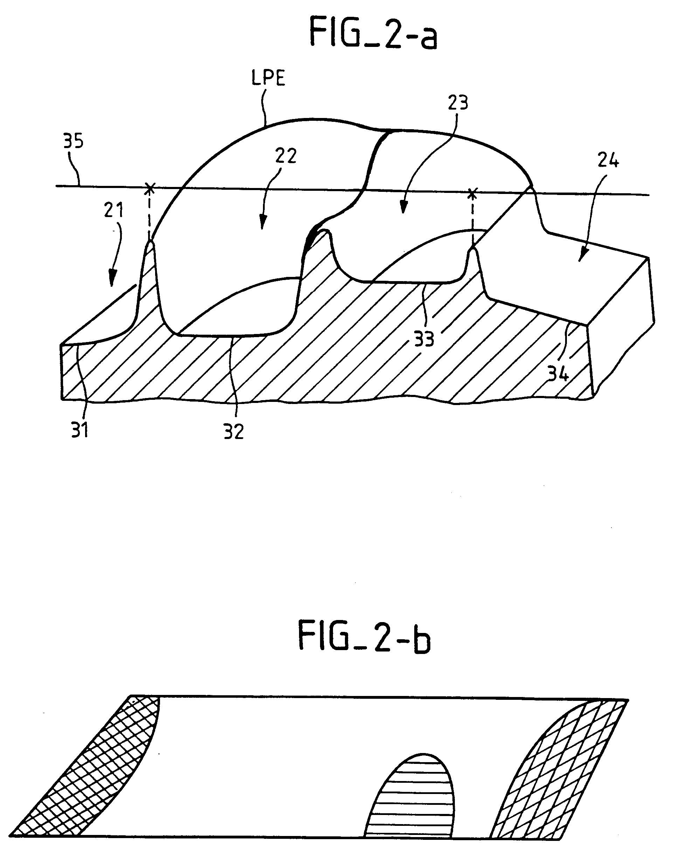

La figure 2a montre, dans un exemple qui sera étudié plus loin, l'utilisation de l'invention pour, sur un modèle numérique de terrain, déterminer quelle est la ligne de partage des eaux LPE entre des bassins versants 21 à 24. La recherche d'une telle ligne de partages des eaux est par exemple utile en cartographie pour la détermination des bassins versants associés à chaque rivière. La figure 2a est une image physique où les points d'image ont des adresses à deux dimensions (x,y) et où le paramètre d'image est par exemple l'altitude en ces points (z). Dans ce cas cette altitude n'est pas un terme de l'adresse mais la valeur du paramètre d'image. La figure 2b représente l'image marqueur, où chaque point possède un label marqueur désignant la classe auquel il appartient. Certains points, à l'aplomb des bassins 21 à 24, possèdent déjà un label marqueur identifié par des stries dans le dessin, les autre n'en possèdent pas encore (ou bien la valeur de leur label marqueur est nulle).

La construction de la ligne de partage des eaux peut se voir comme un processus d'inondation, au cours duquel chaque point de l'image marqueur possédant un label devient la source d'une inondation. Tous les points inondés à partir d'un point source porteront le label de ce point source et appartiendront au bassin versant associé à ce label. Les sources sont réglées de telle manière qu'à tout moment la hauteur de l'inondation ait une altitude uniforme.

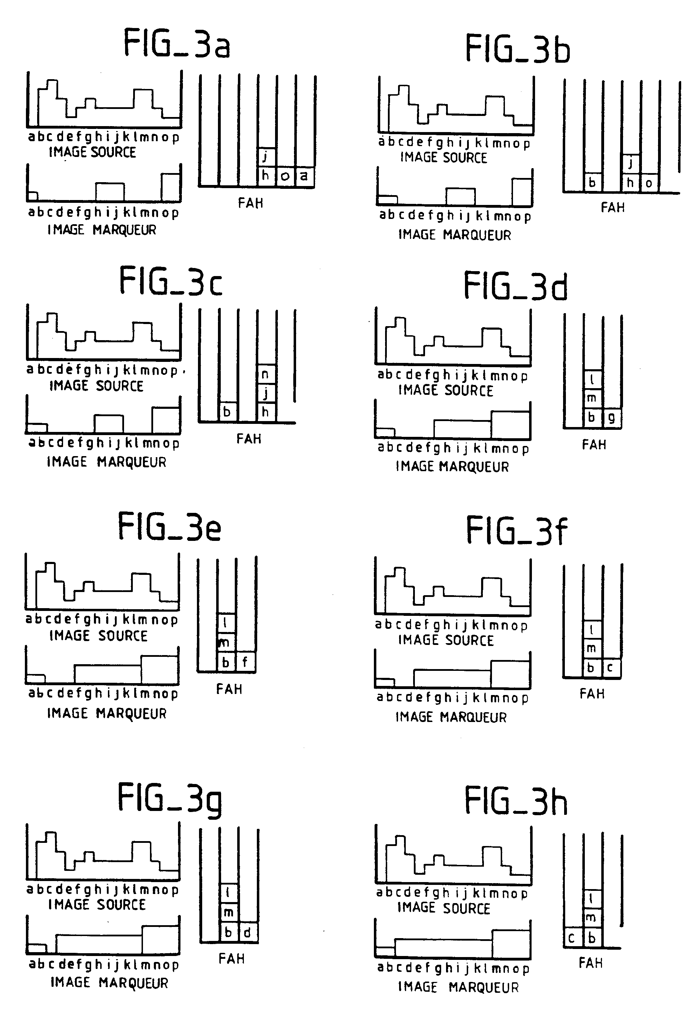

Lorsque l'intégralité du relief a été inondée, chaque point de l'image marqueur porte le label de la source à partir duquel il a été inondé. Dans le but de simplifier l'explication on se contentera d'indiquer ici, en particulier en référence aux figures 3a à 3h, ce qui se passe à l'aplomb d'une ligne 35 de l'image de la figure 2a. Autrement dit on va se contenter d'explorer les points d'images ayant une même ordonnée y. Ceci ne constitue en rien une restriction. A 1 à 2, 3 voire 4 dimensions lorsqu'on incorpore le temps, la construction de la ligne de partage des eaux se fait exactement de la même manière, il suffit de choisir la structure de voisinage adaptée au nombre des dimensions. Sur les figures 3a à 3h on a représenté avec des abscisses a à p (donc des adresses) des points d'image situés à l'aplomb de la ligne 35. En ordonnée, sur le graphe situé en haut à gauche des figures 3a à 3h, on a montré la valeur de l'image physique en chacun des points. Sur le graphe en bas à gauche des figures 3a à 3h on a montré la valeur du label de l'image marqueur. L'image 3a présente les images physique et marqueur initiales. Dans notre cas, l'image marqueur comporte 3 marqueurs :

- le premier marqueur a la valeur de label 1 et comporte le point a,
- le second marqueur a la valeur de label 2 et comporte les points h,i et j, mais pas le point k,
- le troisième marqueur a la valeur de label 3 et comporte les points o et p.

On va voir maintenant comment le procédé de l'invention se particularise pour construire une des variantes de la ligne de partage des eaux. On en déduira aisément comment le particulariser pour une autre variante.

Dans la phase d'initialisation

- on crée un groupe hiérarchisé de files d'attente. Le nombre des files d'attente, ici d'une manière simplifiée 6 files, est égal aux valeurs 12 possibles du paramètre physique en chaque point d'image. Dans le cas présent ce paramètre physique peut valoir de 0 à 5. On peut sous certaines conditions réduire ce nombre des files d'attente, en particulier si certaines valeurs ne sont pas représentées. On a représenté sur la partie droite des figures 3a à 3h l'état de la mémoire de travail 500 et le remplissage des files d'attente. on repère dans l'image les points initiateurs du procédé. Il s'agit dans notre cas, par convention liée à cet exemple, des points des marqueurs possédant dans leur voisinage un point n'appartenant pas à un marqueur, i.e. les points a, h, j et o. C'est pour cette raison que ni le point i ni le point p ne sont considérés comme initiateurs.

- on range les points d'image initiateurs dans une file d'attente, cette file d'attente est relative à la valeur de leur paramètre physique. Ainsi le point a est rangé avec une file d'attente à droite correspondant à une valeur 0, les points h et j dans une file correspondant à une valeur 2 et le point o dans une file correspondant à une valeur 1. La FAH résultante est montrée dans la partie droite de la figure 3a.

Dans la phase de traitement, on répétera tant que la FAH n'est pas vide les étapes 1 et 2 :

- étape 1 : on extrait le point le plus prioritaire de la file d'attente la plus prioritaire en cours de traitement, soit x ce point,
- étape 2 : chaque voisin y de x, appartenant à la liste de voisinage de x, et dépourvu de label (ou avec un label de valeur nulle) dans l'image marqueur, est stocké dans la FAH avec une priorité correspondant à son paramètre d'image dans l'image physique. Il reçoit, au moment de son stockage dans la FAH, dans l'image marqueur un label identique à celui de x. Pour des raisons d'économie de mémoire on peut ainsi confondre l'image marqueur avec l'image résultat. De cette manière le contenu de l'image marqueur à la fin du traitement représente l'image résultat.

Les figures 3b à 3h montrent comment le traitement s'effectue. Le point a est le premier point à sortir de la FAH. Il a un paramètre d'image égal à 0 et un label de marqueur égal à 1. Dans le cas présent où, pour simplifier, on se contente d'examiner ce qui se passe sur la ligne 35, les voisins de a à considérer sont seulement ceux qui sont situés de part et d'autre sur la ligne 35. Son seul voisin sur la ligne 35 est le point b. Le point b ne possède pas encore de label dans l'image marqueur, il n'a donc encore jamais été stocké dans la FAH. Le point b est stocké dans la file d'attente correspondant à son paramètre d'image, c'est à dire 4. Le point b reçoit également le label du point a, c'est à dire la valeur 1 dans l'image marqueur. Le résultat du traitement du point a est illustré dans la figure 3b. Le traitement du point a n'a fait entrer aucun point dans la file d'attente de priorité 0. Celle-ci étant vide (figure 3b), elle est supprimée et la file d'attente de priorité 1 devient la plus prioritaire.

Le point o est le prochain point à sortir de la FAH. En sortant de la FAH il y fait entrer ses voisins de droite et de gauche. Son voisin de gauche, le point n n'a pas encore de label. Il est stocké dans la file d'attente correspondant à son paramètre d'image, c'est à dire 2. Il reçoit le label de o, c'est à dire la valeur 3 dans l'image marqueur. Le voisin droit du point o est le point p. Il possède déjà un label et n'est donc pas traité plus avant. Le résultat du traitement du point o est illustré dans la figure 3c. A l'issue du traitement de o, la file d'attente de priorité 1 est vide et est supprimée.

Le traitement de la file d'attente de priorité 2 se déroule ensuite comme suit :

- le point h, au moment de son extraction, fait entrer son voisin g dans la file d'attente 3 et lui confère le label 2, c'est à dire son propre label.
- le point j fait entrer son voisin k dans la file d'attente 2 et lui confère le label 2.
- le point n fait entrer son voisin m dans la file d'attente 4 et lui confère le label 3.
- le point k fait entrer son voisin l dans la file d'attente 4 et lui confère le label 2.

La file d'attente de priorité 2 est maintenant vide, elle est supprimée. Image marqueur et FAH sont illustrées dans la figure 3d. Commence le traitement de g. Son seul voisin sans label est le point f. Or f a un paramètre d'image égal à 2. Il faudrait donc le stocker dans la file d'attente de priorité 2. Or celle-ci a été supprimée. On se contente alors de stocker f dans la file d'attente la plus prioritaire en cours de traitement, à savoir la file d'attente de priorité 3 (voir figure 3e) et de donner à f le label 2. On pourrait aussi dans une variante réserver une file d'attente spéciale pour traiter ces situations d'urgence, qui aurait une priorité plus grande que toutes les autres files d'attente encore existantes à un moment donné du traitement. De même, le traitement de f fait entrer le point e avec le label 2 dans la file d'attente 3, bien que le paramètre d'image de e soit 1 (figure 3f). La figure 3g montre comment le point e fait entrer le point d dans la FAH et lui confère le label 2. Le point c est alors le seul point sans label. Le traitement de d le fait entrer dans la FAH et lui confère le label 2. La file d'attente de priorité 3, vide, est maintenant supprimée (figure 3h). Les prochains points à sortir de la FAH sont dans l'ordre les points b, m, l et c. Aucun de ces points ne possède plus aucun voisin sans label. Leur traitement ne fait donc pas entrer de nouveaux points dans la FAH. Ainsi, lorsque le dernier point, soit c, sort de la file d'attente, celle-ci se trouve vide et le traitement s'arrête. A ce moment tous les points sont munis d'un label dont on se sert pour exploiter l'image.

Il existe plusieurs variantes de l'algorithme de ligne de partage des eaux pouvant être toutes exécutées selon le procédé de l'invention qui permet de simuler le bon ordre de l'inondation grâce à l'utilisation des files d'attente hiérarchiques. Dans l'une d'elles on "érige une digue" en tout point où des inondations issues de 2 sources différentes se rencontrent. Nous allons l'illustrer en l'appliquant à des images physiques vectorielles. Un exemple important mais non limitatif de telles images physiques vectorielles est constitué par des images en couleur. Une image en couleur possède un niveau de luminosité dans chacune des couleurs de base. En mode télévision classique, ces couleurs sont le rouge, le vert, et le bleu. Ou encore, d'une manière plus adaptée, on peut transformer les composantes en R, V, B (rouge, vert, bleu) en des composantes dites H, L, S représentant respectivement la teinte, la luminance et la saturation. Il est connu de faire une combinaison de ces trois valeurs R, G, B ou H, L, S ou toute autre représentation vectorielle de la couleur, telles que celles qui sont définies par le Comité International de l'Eclairage (CIE), pour calculer une distance entre les valeurs colorées de deux points image. On peut par exemple retenir une solution euclidienne de cette distance, cette distance étant alors mesurée entre le point traité et un point voisin selon la forme suivante,

$$D1 = (Rt - Rv)^2 + (Gt - Gv)^2 + (Bt - Bv)^2$$

Ceci est une mesure de la distance d'un point traité t à un point voisin v. Le procédé de l'invention s'applique quelle que soit la fonction distance choisie. Dans l'exemple illustré, nous choisirons une autre distance selon la formule suivante :

$$D2 = Max (Rt - Rv, Gt - Gv, Bt - Bv).$$

Voyons à présent comment se construit la ligne de partage des eaux pour une image couleur. Sont données au départ une image physique vectorielle, comportant pour chaque point image 3 valeurs, par exemple la luminosité du point dans les 3 canaux rouge, vert et bleu, ainsi qu'une image marqueur, présentant la classe d'appartenance de certaines régions de couleur homogène de l'image. L'algorithme de ligne de partage des eaux va faire croître ces régions en leur assignant, de proche en proche, les points d'image voisins dont la couleur s'en éloigne le moins. Ce procédé permet donc de délimiter dans une image en couleur des régions de couleur homogène entourant un marqueur initial. Il est possible ainsi d'entourer divers cristaux colorés d'une roche observée en microscopie à lumière polarisée, ou bien des cellules appartenant à des sous-populations cellulaires marquées sur une plaquette par une substance colorée spécifique.

Dans la phase d'initialisation
- on crée un groupe hiérarchisé de files d'attente. Le nombre des files d'attente correspond à la distance maximale entre 2 couleurs de 2 points images.
- on repère dans l'image les points initiateurs du procédé. Il s'agit dans notre cas (autre variante de convention) de points non marqués possédant dans leur voisinage un point appartenant à un marqueur,
- on range chaque point d'image initiateurs dans une file d'attente, cette file d'attente étant relative à sa distance à la région marquée voisine. Un point voisin de deux régions marquées par des labels différents n'est pas stocké dans la FAH et reçoit immédiatement dans l'image marqueur un label indiquant qu'il appartient à la frontière. Par rapport à la variante précédente les points initiateurs sont maintenant des points voisins direct non marqués d'un marqueur, alors qu'avant il s'agissait des points des marqueurs voisins de points non marqués.

Dans la phase de traitement, on répète, tant que la file d'attente hiérarchique n'est pas vide, les étapes 1 et 2 :
- étape 1 : on extrait le point le plus prioritaire de la file d'attente la plus prioritaire en cours de traitement, soit x ce point
- étape 2 : si le point x est voisin de deux régions possédant des labels différents dans l'image, on lui donne un label de point frontière et on recommence l'étape 1 pour le prochain point de la FAH ;

si le point x est voisin d'une seule région marquée voisine, on donne au point x le label de cette région dans l'image marqueur (qui sert d'image résultat) et on passe en revue tous ses voisins.

Pour chaque voisin y de x sans label dans l'image marqueur :
- on détermine la distance de y à la région marquée voisine de x. Cette distance constitue le niveau de priorité avec lequel le point y est stocké dans la FAH.
- on stocke y dans la FAH avec son niveau de priorité.

Il reste à préciser ce qu'on entend par distance entre un point t et une région marquée voisine R. Il peut s'agir simplement de la plus courte distance entre la couleur de t et la couleur du voisin de t dans la région R qui aurait la couleur la plus proche de t. Calculer la distance au point ayant la distance la plus proche permet de construire des régions ayant des dégradés de couleur entre les points. Pour au contraire s'écarter le moins possible de la couleur de référence de la région, on peut par exemple à tout moment calculer la couleur moyenne de l'ensemble des points constituant une région et calculer la distance de tout nouveau point à cette couleur moyenne. On peut aussi définir une couleur de référence fixe pour chaque région par rapport à laquelle on calcule la distance de tout nouveau point. Une somme pondérée de ces diverses distances est également envisageable.

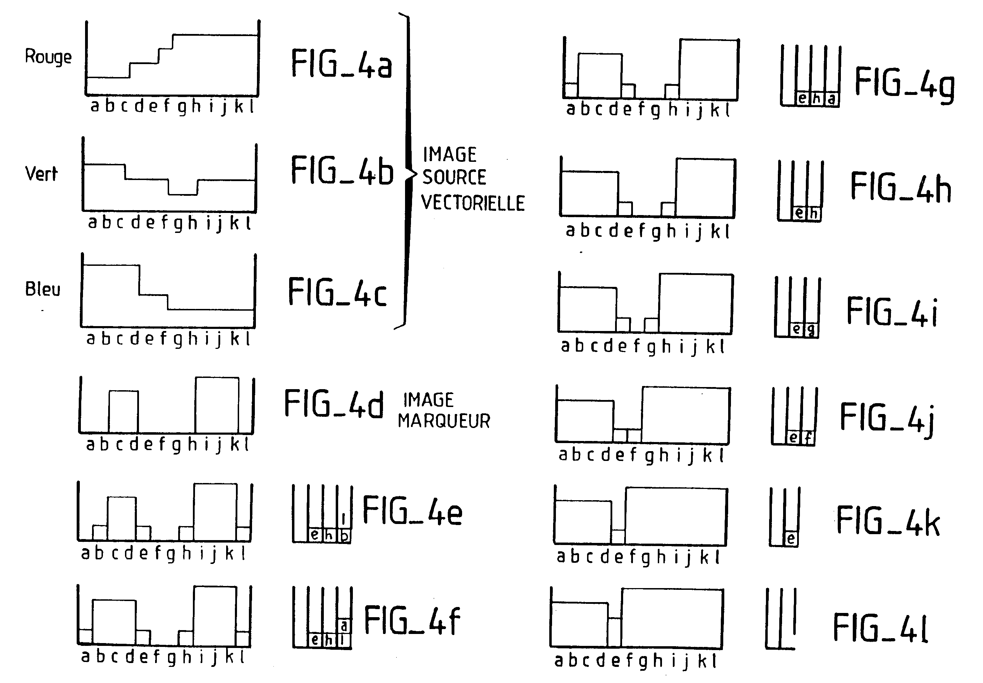

L'examen des figures 4a à 4l va donner une illustration de cette segmentation. Les figures 4a à 4c représentent les trois composantes de base rouge, vert, bleu de la couleur d'un corps physique unidimensionnel (d'abscisse a à l). Il s'agit donc bien d'une image physique vectorielle. La figure 4d représente l'image marqueur. C'est également cette image qui servira à représenter le résultat final indiquant la classe d'appartenance de chaque point du corps physique. Pour pouvoir utiliser cette image comme image résultat et comme image marqueur on réserve deux valeurs de labels pour un usage particulier. Le label 1 signifie qu'un point a été mis dans la FAH et n'en est pas encore sorti. Le label 2 signifie qu'un point appartient à une zone frontière entre 2 régions. L'image marqueur par ailleurs comporte deux régions déterminées par une opération de marquage. La première région, de label 3 comprend les points c et d, la deuxième, de label 4, comprend les points i, j et k.

Nous choisissons, pour illustrer l'exemple, la distance D2 présentée plus haut.

D'autre part, pour établir la distance entre un point x et une région X voisine, on retient la plus petite distance entre la couleur de x et les couleurs des voisins de x appartenant à la région X.

La figure 4e montre le résultat de l'initialisation: une FAH à 4 niveaux a été créée, car la distance maximale possible entre 2 couleurs est égale à 4. Les voisins des marqueurs, c'est à dire les points b, e, h, et l ont été stockés dans la FAH avec un niveau de priorité égal à la distance entre le point considéré et la région marqueur voisine. Ainsi le point e a été stocké avec une priorité égale à 2. En effet la composante bleue de l'image de e présente une différence d'intensité égale à 2 avec celle du point d voisin appartenant au marqueur. Cette différence d'intensité est plus forte que les différences d'intensité entre les composantes vertes ou rouges. Les points b et l sont stockés avec une priorité 0. En effet leurs voisins dans le marqueur, respectivement c ou k, ont toujours des mêmes valeurs qu'eux pour chacune des composantes bleue verte ou rouge de l'image. Le point h est stocké avec une priorité 1. On rappelle que tout point stocké dans la FAH reçoit un label égal à 1 dans l'image marqueur.

Le point b est le premier à être traité. Il ne possède dans son voisinage qu'une région marquée, de label 3. Le point b prend donc ce label 3 et fait entrer dans la FAH le point a avec une priorité 0, car la distance des couleurs de a et b vaut 0. Simultanément le point a reçoit un label 1 dans l'image marqueur, signifiant qu'il a été stocké dans la FAH. Sont traités ensuite successivement les points l et a (fig.4g et 4h), qui prennent respectivement les labels 4 et 3, mais ne font entrer aucun nouveau point dans la FAH, car ils appartiennent chacun au bord de l'image. La file d'attente de priorité 0, vide, est alors supprimée. Le point h prend le label 4, celui de son voisin i qui possède déjà un label. Il fait entrer le point g avec une priorité 0, dans la file d'attente de priorité 1, car celle de priorité 0 a été supprimée (fig.4i). g prend ensuite le label 4 et fait entrer f dans la file de priorité 1 (fig. 4j). Le traitement de f confère à ce point un label égal à 4, mais ne fait pas entrer de nouveau point dans la FAH ; en effet le voisin e de f possède déjà un label égal à 1 indiquant qu'il appartient déjà à la file d'attente. Le traitement de e achève la segmentation : e est voisin de 2 régions dont les labels valides (supérieur ou égaux à 3) sont différents. Il appartient donc à une zone frontière et prend le label distinctif des frontières, à savoir 2. Remarquons que dans une image à plus de 2 dimensions un tel point frontière pourrait posséder des voisins qui ne sont pas encore stockés dans la FAH; dans ce cas on décide qu'il ne les ferait pas entrer dans la FAH.

Le stockage des labels d'abord 1, quand le point est mis dans la FAH, puis 3 ou 4 (ou même 2 pour les points frontière) quand il en sort n'est pas nécessairement effectué dans une seule et même mémoire. On a déjà indiqué qu'il pouvait y avoir une confusion entre l'image des marqueurs et l'image résultat. Tout aussi bien du fait du caractère temporaire du label 1, ce dernier peut être stocké avec l'adresse du point concerné dans une mémoire de travail auxiliaire 5'. Ou bien il peut être stocké dans une zone de la mémoire résultat différente de celle où doit être stocké le label d'appartenance à une région.

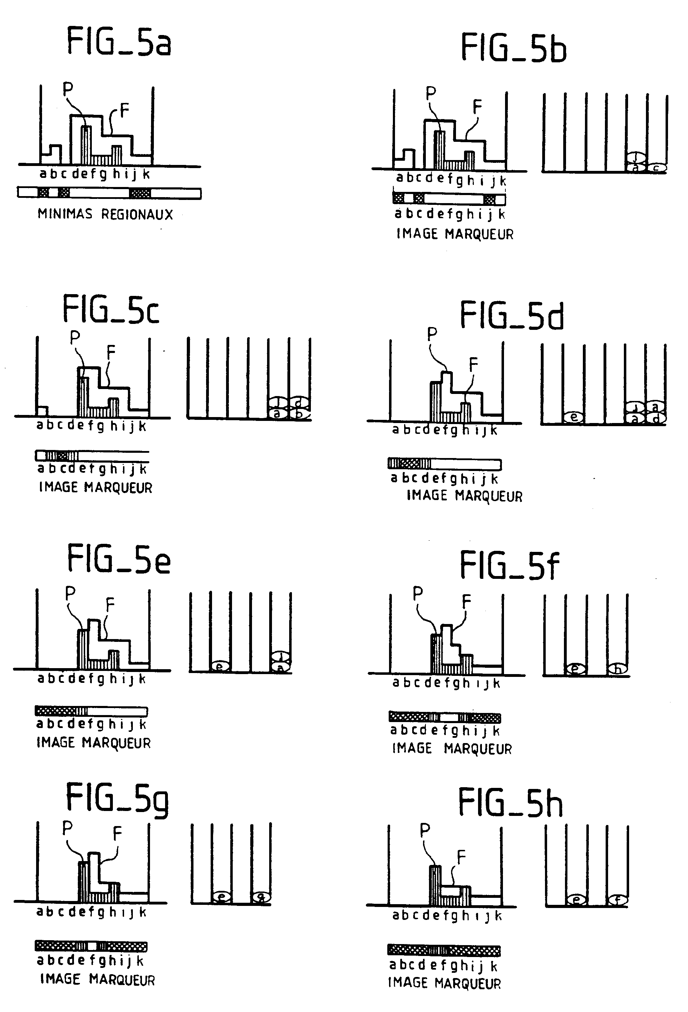

A l'examen des figures 5a à 5h on va donner maintenant un autre exemple de mise en oeuvre de l'invention. Cette autre mise en oeuvre correspond à un algorithme d'emballage (ou de filtrage). On va considérer qu'un paquet P (figure 5a) doit être emballé dans un film F. Le film est du type thermo-rétractable. On considère ce qui se passe dans une coupe du dispositif. On repère pour chaque abscisse dans cette coupe les altitudes d'une part du film et d'autre part du paquet à emballer. On notera que les altitudes du film sont toujours supérieures ou égales aux altitudes du paquet. Le paquet P est représenté en hachures. Le film est représenté en traits gras. La figure 5h montre l'allure de l'emballage (ou du filtre) une fois qu'il est terminé. Le film colle au paquet, mais présente moins d'aspérités. Cette opération d'emballage présente un grand intérêt lorsqu'on l'applique à des images particulières. On peut on effet considérer qu'au lieu d'un paquet P on a affaire à une image dont la luminosité est fort bruitée. Pour enlever le bruit, on peut vouloir recouvrir le signal de cette image d'un "film" qui présentera à l'issue du traitement une allure lisse. Dans ce cas, le paquet serait représenté par le signal de luminosité, le film serait représenté par exemple par ce signal de luminosité augmenté, en tous points, d'une grandeur donnée suffisante (supérieure au bruit), ou toute autre fonction majorant P. A l'issue du traitement le film représente le signal filtré.

Pour simplifier on va supposer ici que le film est rétractable seulement dans une direction horizontale de manière à coller aux parois du paquet P. Cette simplification ne concerne que la fonction mise en oeuvre dans le traitement. Cette fonction peut-être plus ou moins compliquée en fonction du but à atteindre avec le traitement d'image. Ce qu'on cherche à montrer avec l'invention est, pour une fonction donnée (donc, dans ce cas, celle de l'effet thermo-rétractable horizontal), comment s'enchaînent les traitements des différents points d'image, indépendamment de la nature de ces traitements.

Dans le cas présent on a choisi comme marqueurs un point quelconque des minima régionaux de l'image F. On aurait pu retenir les minima régionaux dans leur intégralité, représentés sur la fonction binaire située dans la partie basse de l'image 5a. A titre de traitement automatique des marqueurs on a pu choisir arbitrairement pour figurer dans la FAH les points les plus à gauche de chacun des minima régionaux, ou pour une image multidimensionnelle le premier point rencontré de chaque minimum régional. On a donc déterminé comme étant des marqueurs les points, en partant de la gauche, a, c et j (figure 5b basse).

On va voir maintenant comment le procédé de l'invention se particularise pour réaliser l'algorithme d'emballage.

Dans la phase d'initialisation :

- on crée un groupe hiérarchisé de files d'attente, en nombre égal aux nombres de niveaux de gris de la fonction F,
- on repère dans l'image les points initiateurs du procédé. Il s'agit dans notre cas d'un point quelconque de tout minimum régional de la fonction F (ce sont ici les points a c et j) ,
- on range les points d'image initiateurs dans une file d'attente, cette file d'attente étant relative à leur valeur pour la fonction F. On constate donc, en passant en revue les trois exemples présentés jusqu'ici, que le rang de priorité pour le rangement d'un point, initiateur ou non, dans une file d'attente de la FAH est soit lié au paramètre physique de l'image physique, soit lié au paramètre marqueur qui lui est attribuable, soit enfin au paramètre résultat.

A l'issue de cette opération d'initialisation, l'image marqueur est mise à 0 afin de pouvoir contrôler le déroulement du traitement. Ce contrôle comporte les étapes suivantes:

a) dès qu'un point sort de la FAH, on lui affecte pour la fonction F une valeur définitive. Pour reconnaître ceci dans la suite du traitement, on lui donne une valeur de label égale ici à 2 dans l'image marqueur (points marqués en gris sombre dans les dessins 5c à 5h)

b) tout point reçoit une valeur égale à 1 dans l'image marqueur lors de son stockage dans la FAH (points en gris clair).

Ainsi si un point n'a pas de valeur dans la fonction marqueur à une phase quelconque du traitement, il n'a encore jamais été stocké sur la FAH durant ce traitement.

Dans la phase de traitement, on répète tant que la file d'attente hiérarchique n'est pas vide les étapes 1 et 2 :

- étape 1 : on extrait le point le plus prioritaire de la file d'attente la plus prioritaire en cours de traitement, soit x ce point. Si ce point n'a pas la valeur 2 dans l'image marqueur, c'est à dire n'a pas atteint sa valeur de résultat définitive, on lui donne la valeur 2 dans l'image marqueur et on continue l'étape 2. Si x a atteint sa valeur de résultat définitive, on passe au traitement du point suivant.
- étape 2 : pour chaque voisin y de x, repéré par la liste de voisinage de x, et n'ayant aucune valeur dans l'image marqueur, on effectue le traitement suivant :

a) on considère, dans ce cas particulier, une variable V. La variable V a pour valeur: V = Max (Fx ou Py) dans laquelle Fx représente la valeur de la fonction de film du point x, Py représente la valeur de la fonction de paquet du point voisin y. Le point y est stocké avec la priorité V dans la FAH et est marqué par la valeur 1 dans l'image marqueur.

b) on donne à y comme valeur de résultat la valeur V pour la fonction de film F.

Dans l'exemple représenté figure 5a, les fonctions F et P sont représentées, ainsi que, dans la partie basse, l'emplacement des minima régionaux de la fonction F. En retenant la terminologie évoquée au début on peut dire que le paramètre physique est la valeur de la fonction P, le paramètre marqueur est 1, 2 ou rien selon que le point est dans la FAH, en est sorti, ou n'y est pas encore entré; le paramètre résultat est ici la valeur définitive de la fonction F. La figure 5b, partie basse, montre les points marqueurs qui ont été choisis dans chaque minimum régional. La fonction F comporte 6 niveaux. Une FAH a 6 niveaux de priorité est donc créée, les points a, c et j y sont stockés avec des priorités correspondant à leur valeur pour l'image film. A la fin de l'initialisation la fonction marqueur est mise à 0, sauf éventuellement pour les points qui sont déjà dans la file d'attente et qui conservent la valeur 1 dans l'image marqueur. Commence alors la phase de traitement. Le point c est le premier à sortir de la FAH. La valeur de c dans l'image marqueur n'est pas 2, il peut donc être traité et on lui donne la valeur 2 dans l'image marqueur pour rendre sa valeur définitive. Sa valeur résultat définitive est 0. Le premier voisin de c à examiner est le point b. La valeur de b dans l'image marqueur est 0, on peut donc lui appliquer l'étape 2 du traitement. Pour le point b la valeur V est la valeur maximum de F au point c, ou de P au point b. On voit sur la figure que F au point c vaut 0 et que P au point b vaut aussi 0. Donc le maximum vaut 0, donc la valeur de résultat V pour b vaut 0. Et par conséquent on range b dans la file d'attente de priorité 0, celle qui avait contenu c. On donne alors au point b une valeur 1 dans l'image marqueur pour indiquer qu'il a été stocké dans la FAH. Par conséquent après le traitement de c, figure 5c, on pourra entreprendre le traitement de b. De la même façon, c fait aussi entrer son deuxième voisin, le point d dans la FAH avec la priorité 0.

Après avoir traité c il faut traiter b et d à qui on attribue aussi comme valeurs définitives pour la fonction F résultat la valeur 0. Le traitement de b fait entrer a dans la file d'attente de priorité 0. En effet le maximum de la fonction F au point b ou de la fonction P au point a est 0. On remarque alors que le point a est ainsi stocké à deux endroits différents de la FAH (figure 5d). Ceci est dû au fait que a est aussi l'élément représentatif d'un minimum régional de la fonction F. Toutefois a va prendre sa valeur définitive lors de sa première sortie de la FAH. Lors de sa deuxième sortie il ne sera plus traité. Le traitement du point d fait entrer le point e dans la FAH avec une priorité de 4. Ceci est représenté sur la figure 5d.

Le traitement du point a de priorité 0, figure 5d, rend la valeur de a définitive pour l'image F (elle est égale à 0). Pour signifier que cette valeur est définitive, on donne à ce point a dans l'image marqueur la valeur 2. La file d'attente de priorité 0, vide, est à présent supprimée. Le prochain point à traiter est également le point a qui a déjà sa valeur définitive. Ceci est dû à ce que a a déjà été préalablement stocké dans la FAH avec une valeur de priorité correspondant à la phase d'initialisation. Par la suite la valeur de a change. Elle devient définitive quand a sort de la FAH la première fois. Par conséquent dans un test de l'étape 1 on ne le traite pas une deuxième fois, et on passe au voisin suivant, c'est à dire le point j. Le traitement du point j rend sa valeur définitive et fait entrer les points i et k dans la file d'attente de priorité 1. Ce traitement des points i et k fait entrer d'une part le point h dans la file d'attente de priorité 2 et d'autre part confère la valeur définitive 1 pour la fonction F aux points i et k. L'emballage prend alors la forme représentée sur la figure 5f partie gauche.

Ainsi de suite le traitement se poursuit jusqu'à donner la représentation de la figure 5h. La fonction F enveloppant la fonction P peut donc en constituer un filtrage antibruit.

On constate que dans tous les exemples donnés nous partons d'une image physique, éventuellement vectorielle et d'une image marqueurs. Il y a une sélection des points initiateurs, leur mise en file d'attente, et un traitement des points de l'image en sélectionnant le premier qui se trouve dans la file d'attente. Puis on range, au fur et à mesure dans la file d'attente, des points d'image. Le rang de priorité de la file d'attente choisi pour le rangement est fonction soit d'un paramètre d'image (physique, marqueur ou résultat) du point traité, soit d'un paramètre d'image (dito) du ou des voisins du point traité, soit encore d'une combinaison de ces paramètres d'image. Le traitement de l'image consiste à calculer la valeur de l'image : résultat en chaque point. Peu importe la manière dont cette image résultat est enregistrée : elle peut être écrite dans une image particulière, ou alors se substituer progressivement à l'image marqueur ou à l'image physique. Nous en avons vu des exemples : attribution d'un label d'appartenance écrit dans l'image marqueur dans le cas de la ligne de partage des eaux, modification progressive de l'image film dans le cas de l'algorithme d'emballage. Ce traitement est plus ou moins complexe. Dans tous les cas il y a une itération jusqu'à ce que tous les points soient traités. Dans tous les cas les points d'images ne sont traités qu'une fois. On constate à l'examen des figures 3a à 3h, 4e à 4l et 5b à 5h partie droite, que la place occupée en mémoire par les points d'image en instance de traitement est limitée. Elle est bien moins grande que si on avait stocké, d'avance, tous les points d'image. Les point stockés appartiennent en effet aux frontières des régions ayant leur valeur définitive. De plus, au fur et à mesure qu'on s'occupe des points d'image, à un niveau de priorité donné, statistiquement les points voisins ont de grandes chances de correspondre à des niveaux de priorité similaire. Donc, en général, le nombre de files d'attente réellement actives est faible. D'autre part, comme les points traités ne sont plus, en général, réenregistrés dans la FAH, le volume de celle-ci est faible.

On est capable de donner une valeur définitive au moment où un point sort de la FAH, son voisinage est suffisamment connu pour calculer sa valeur définitive. L'ordre de traitement ainsi impliqué est correct à condition que dans chaque file d'attente ce traitement corresponde à l'ordre d'arrivée des points dans la FAH. Ceci garantit que les plateaux des fonctions sont attribués correctement aux régions au moment où on construit la ligne de partage des eaux.

## Revendications

1.  Procédé de traitement d'une image stockée dans une mémoire (500) qui contient à chaque adresse (fig.1: xyzt; fig. 3, 4, 5: abc...) la valeur physique (12) d'un point de l'image et un label marqueur associé à ce point pour obtenir ainsi une image physique et une image marqueur, ledit procédé comportant une phase d'initialisation et une phase de traitement, et ayant pour but la construction d'une image résultat, au cours duquel :
    dans la phase d'initialisation
    - on crée dans une mémoire un groupe hiérarchisé de files d'attente (14-19), ou FAH, les files d'attente étant du type premier entré premier sorti, et étant différenciées les unes des autres selon un ordre prioritaire déterminé par leur correspondance à une valeur parmi des valeurs possibles d'un paramètre de priorité,
    - on repère dans la mémoire de l'image physique et/ou marqueur des points initiateurs du procédé ,
    - on évalue un niveau de priorité de chaque point initiateur en fonction des valeurs physiques ou des labels marqueurs de ce point et de ses points voisins dans une fenêtre d'image,
    - on range l'adresse de chaque point initiateur dans une file d'attente qui correspond à la valeur de son niveau de priorité,
    dans la phase de traitement, on répète, tant que la FAH n'est pas vide, les étapes 1 et 2 :
    - étape 1 : on extrait l'adresse du point le plus prioritaire de la file d'attente la plus prioritaire en cours de traitement, soit x ce point,

- étape 2 : pour chaque voisin y de x, repéré par une liste de voisinage de x, et n'ayant encore jamais été stocké dans la FAH durant la phase de traitement, on évalue le niveau de priorité de y en fonction des valeurs physiques des points de la fenêtre d'image de x, on stocke l'adresse de y dans la FAH qui correspond à ce niveau de priorité, et on donne à x dans la mémoire de l'image marqueur et/ou résultat un label dépendant des labels des points de sa fenêtre.

2. Procédé selon la revendication 1, caractérisé en ce qu'on évalue pour chaque point t, au moment où il doit être mis dans la FAH, la valeur d'un paramètre physique qui lui sert de paramètre de priorité.

3. Procédé selon la revendication 2, caractérisé en ce que pour évaluer la valeur du paramètre physique on calcule une distance entre le point t et une région marquée voisine R.

4. Procédé selon la revendication 3, caractérisé en ce que pour calculer la distance on calcule la plus courte distance entre la couleur de t et la couleur d'un voisin de t dans la région R qui aurait la couleur la plus proche de t.

5. Procédé selon la revendication 3 ou la revendication 4, caractérisé en ce qu'on calcule la couleur moyenne de l'ensemble des points constituant une région voisine de t et en ce que pour calculer la distance on calcule la distance de la couleur du point t à cette couleur moyenne.

6. Procédé selon l'une quelconque des revendications 3 à 5, caractérisé en ce qu'on définit une couleur de référence fixe pour chaque région et en ce que pour calculer la distance on calcule la distance de la couleur du point t à cette couleur de référence.

7. Procédé selon l'une quelconque des revendications 1 à 6, caractérisé en ce qu'on repère les point initiateurs comme ceux appartenant à un marqueur et possédant dans leur voisinage un point n'appartenant pas à ce marqueur.

8. Procédé selon l'une quelconque des revendications 1 à 6, caractérisé en ce qu'on repère les point initiateurs comme ceux hors d'un marqueur et possédant un point d'un marqueur dans leur voisinage.

9. Procédé selon l'une quelconque des revendications 1 à 8, caractérisé en ce qu'on range chaque adresse des points d'image initiateurs dans une file d'attente relative à une valeur conventionnelle d'initialisation.

10. Procédé selon l'une quelconque des revendications 1 à 9, caractérisé en ce que
- quand une file d'attente prioritaire a été vidée des adresses des points d'image qu'elle contenait on la supprime du groupe des files d'attente,
  et en ce que
- les adresses de points d'image sélectionnés ultérieurement à cette suppression, qui devraient être rangées dans cette file d'attente supprimée, sont rangées dans la file d'attente de rang le plus prioritaire existant après le rang de cette file d'attente supprimée.

11. Procédé selon l'une quelconque des revendications 1 à 9, caractérisé en ce que
- quand une file d'attente prioritaire a été vidée des adresses des points d'image qu'elle contenait on la supprime du groupe des files d'attente,
  et en ce que
- les adresses de points d'image sélectionnés ultérieurement à cette suppression, qui devraient être rangées dans cette file d'attente supprimée, sont rangées dans une file d'attente spéciale de rang plus prioritaire que toutes les autres files d'attente à un moment donné du traitement, pour traiter ces situations d'urgence.

12. Procédé selon l'une quelconque des revendications 1 à 11, caractérisé en ce que pour évaluer le niveau de priorité de y on calcule le gradient d'une grandeur physique mesurée dans un corps et affectée à un point d'image correspondant pour y au lieu dans le corps où est faite cette mesure.

13. Procédé selon l'une quelconque des revendications 1 à 12, caractérisé en ce que pour évaluer le niveau de priorité de y
- on élabore, selon un algorithme de calcul, un paramètre d'image représentatif d'une fenêtre d'image de ce point.

14. Procédé selon l'une quelconque des revendications 1 à 13, caractérisé en ce que pour sélectionner des points d'images y voisins d'un point x,
- on sélectionne tous les points d'images dont au moins un des termes d'adresse est différent d'une unité du terme correspondant de l'adresse du point x.

**15.** Procédé selon l'une quelconque des revendications 1 à 14, caractérisé en ce que pour sélectionner les points d'images y voisins d'un point x,

- on sélectionne tous les points d'images dont au moins un des termes d'adresse est différent au plus de deux unités du terme correspondant de l'adresse du point x.

**16.** Procédé selon l'une quelconque des revendications 1 à 14, caractérisé en ce que pour sélectionner les points d'images y voisins d'un point x,

- on sélectionne tous les points d'images qui appartiennent à une liste attachée au point x.

**17.** Procédé selon l'une quelconque des revendications 1 à 16, caractérisé en ce qu'au moment de son stockage dans la FAH y reçoit dans l'image marqueur et/ou résultat un label identique à un label qui a été attribué à x dans cette image marqueur et/ou résultat.

**18.** Procédé selon l'une quelconque des revendications 1 à 17, caractérisé en ce qu'au moment de son extraction de la FAH x reçoit dans l'image marqueur et/ou résultat un label déterminé de la manière suivante:

- si le point x est voisin de deux régions possédant des labels différents dans l'image, on lui donne un label de point frontière et on recommence l'étape 1 pour le prochain point de la FAH ;
- si le point x est voisin d'une seule région marquée voisine, on donne au point x le label de cette région.

**19.** Procédé selon l'une quelconque des revendications 1 à 16, caractérisé en ce qu'au moment de son stockage dans la FAH, durant la phase de traitement, un point reçoit un label indiquant qu'il a été stocké dans la FAH et, qu'au moment où il sort de la FAH, il reçoit un autre label indiquant que ce point en est sorti.

**20.** Procédé selon l'une quelconque des revendications 1 à 16 ou 19, caractérisé en ce que pour tout point x sortant de la FAH, et ne possédant pas encore un label caractéristique des points sortis de la FAH, on applique le traitement suivant à chaque voisin y de x n'ayant pas encore de label dans l'image marqueur:

a) on considère une variable V fonction des vecteurs images en x et en y,

b) on stocke le point y avec une priorité V dans la FAH,

c) et on donne à y comme valeur de résultat dans l'image résultat la valeur de V.

**21.** Procédé selon la revendication 20, caractérisé en ce que la variable V a pour valeur:
V = Max (Fx ou Py), dans laquelle Fx représente une valeur d'une fonction de film au point x, Py représentant une valeur physique au point voisin y.

**Patentansprüche**

**1.** Verfahren zur Verarbeitung eines Bildes, das in einem Speicher (500) gespeichert ist, der bei jeder Adresse (Fig. 1: xyzt; Fig. 3, 4, 5: abc ...) den physischen Wert (12) eines Punktes des Bildes und ein mit diesem Punkt verknüpftes Markieretikett enthält, um auf diese Weise ein physisches Bild und ein Markierbild zu erhalten, wobei das genannte Verfahren eine Initialisierungsphase und eine Verarbeitungsphase umfaßt und den Aufbau eines Endbildes zum Ziel hat, wobei in der Initialisierungsphase

- in einem Speicher eine hierarchisierte Gruppe von Warteschlangen (14 - 19) oder FAH geschaffen wird, wobei es sich um Warteschlangen des Typs First-in-First-out handelt, die nach einer Prioritätsfolge voneinander unterschieden werden, die durch ihre Entsprechung mit einem Wert unter mehreren möglichen Werten eines Prioritätsparameters bestimmt ist,
- im Speicher des physischen und/oder Markierbildes die Ausgangspunkte des Verfahrens markiert werden,
- eine Prioritätsstufe von jedem Ausgangspunkt als Funktion der physischen Werte oder der Markieretiketten dieses Punkts und seiner Nachbarpunkte in einem Bildfenster ausgewertet wird ,
- die Adresse jedes Ausgangspunkts in einer Warteschlange eingeordnet wird, die dem Wert seiner Prioritätsstufe entspricht, in der Verarbeitungsphase die Verfahrensschritte 1 und 2 wiederholt werden, solange die FAH nicht leer ist:
- Verfahrensschritt 1: es wird die Adresse des Punkts mit der höchsten Priorität aus der Warteschlange mit der höchsten Priorität in der laufenden Verarbeitung geholt, dieser Punkt sei x,
- Verfahrensschritt 2: bei jedem Nachbarpunkt y von x, der über eine Nachbarpunkteliste von x erfaßt wird und während der Verarbeitungsphase nie in der FAH gespeichert wurde, wird die Prioritätsstufe von y abhängig von den physischen Werten der Punkte des Bildfensters von x ausgewertet, die Adresse von y wird in der FAH gespeichert, die dieser Prioritätsstufe entspricht, und x erhält im Speicher des Markierbildes und/oder Endbildes ein Etikett, das von den Etiketten der Punkte seines Fensters abhängt.

2. Verfahren nach Anspruch 1,
dadurch gekennzeichnet, daß bei jedem Punkt t in dem Augenblick, in dem er in die FAH eingegeben werden muß, der Wert eines physischen Parameters ausgewertet wird, der als dessen Prioritätsparameter dient.

3. Verfahren nach Anspruch 2,
dadurch gekennzeichnet, daß zur Auswertung der Werte des physischen Parameters eine Distanz zwischen dem Punkt t und einem markierten Nachbarbereich R berechnet wird.

4. Verfahren nach Anspruch 3,
dadurch gekennzeichnet, daß zur Berechnung der Distanz die kürzeste Distanz zwischen der Farbe von t und der Farbe eines Nachbarpunkts von t im Bereich R, der in der Farbe am nächsten an t herankommt, berechnet wird.

5. Verfahren nach Anspruch 3 oder 4,
dadurch gekennzeichnet, daß die Durchschnittsfarbe aller Punkte, die einen Nachbarbereich von t bilden, berechnet wird und daß zur Berechnung der Distanz die Distanz zwischen der Farbe des Punkts t und dieser Durchschnittsfarbe berechnet wird.

6. Verfahren nach einem der Ansprüche 3 bis 5,
dadurch gekennzeichnet, daß eine feste Bezugsfarbe für jeden Bereich definiert wird und daß zur Berechnung der Distanz die Distanz zwischen der Farbe des Punkts t und dieser Bezugsfarbe berechnet wird.

7. Verfahren nach einem der Ansprüche 1 bis 6,
dadurch gekennzeichnet, daß die Ausgangspunkte als diejenigen markiert werden, die zu einem Markierer gehören und einen Nachbarpunkt haben, der nicht zu diesem Markierer gehört.

8. Verfahren nach einem der Ansprüche 1 bis 6,
dadurch gekennzeichnet, daß die Ausgangspunkte als die markiert werden, die sich außerhalb eines Markierers befinden und einen benachbarten Markierpunkt haben.

9. Verfahren nach einem der Ansprüche 1 bis 8,
dadurch gekennzeichnet, daß jede Adresse der Ausgangsbildpunkte in eine Warteschlange eingeordnet wird, die sich auf einen vereinbarten Initialisierungswert bezieht.

10. Verfahren nach einem der Ansprüche 1 bis 9,
dadurch gekennzeichnet, daß, sobald eine Warteschlange mit Priorität von den Adressen der Bildpunkte, die sie enthielt, geleert wurde, sie aus der Gruppe der Warteschlangen gelöscht wird, und daß die Adressen der Bildpunkte, die nach diesem Löschvorgang ausgewählt werden und in diese gelöschte Warteschlange eingeordnet werden müßten, in die Warteschlange mit der höchsten Priorität nach dem Prioritätsrang dieser gelöschten Warteschlange eingeordnet werden.

11. Verfahren nach einem der Ansprüche 1 bis 9,
dadurch gekennzeichnet, daß, sobald eine Warteschlange mit Priorität von den Adressen der Bildpunkte, die sie enthielt, geleert wurde, sie aus der Gruppe der Warteschlangen gelöscht wird, und daß die Adressen der Bildpunkte, die nach diesem Löschvorgang ausgewählt werden und in diese gelöschte Warteschlange eingeordnet werden müßten, zur Behebung dieser Notfallsituationen in eine spezielle Warteschlange, die zu einem gegebenen Zeitpunkt in der Verarbeitung eine höhere Priorität hat als alle anderen Warteschlangen, eingeordnet werden.

12. Verfahren nach einem der Ansprüche 1 bis 11,
dadurch gekennzeichnet, daß zur Auswertung der Prioritätsstufe von y der Gradient einer physischen Größe berechnet wird, die an einem Körper gemessen wird und einem Bildpunkt zugeordnet wird, der für y der Stelle an dem Körper entspricht, an der diese Messung vorgenommen wird.

13. Verfahren nach einem der Ansprüche 1 bis 12,
dadurch gekennzeichnet, daß zur Auswertung der Prioritätsstufe von y nach einem Berechnungsalgorithmus ein Bildparameter aufgestellt wird, der ein Bildfenster dieses Punkts darstellt.

14. Verfahren nach einem der Ansprüche 1 bis 13,
dadurch gekennzeichnet, daß zur Auswahl der Nachbar-Bildpunkte y zu einem Punkt x alle Bildpunkte ausgewählt werden, bei denen wenigstens einer der Adressenbegriffe sich von einer Einheit des entsprechenden Begriffs der Adresse von Punkt x unterscheidet.

15. Verfahren nach einem der Ansprüche 1 bis 14,
dadurch gekennzeichnet, daß zur Auswahl der Nachbar-Bildpunkte y zu einem Punkt x alle Bildpunkte ausgewählt werden, bei denen wenigstens einer der Adressenbegriffe sich höchstens von zwei Einheiten des entsprechenden Begriffs der Adresse von Punkt x unterscheidet.

16. Verfahren nach einem der Ansprüche 1 bis 14,
dadurch gekennzeichnet, daß zur Auswahl der Nachbar-Bildpunkte y zu einem Punkt x alle Bildpunkte ausgewählt werden, die zu einer mit dem Punkt x verknüpften Liste gehören.

17. Verfahren nach einem der Ansprüche 1 bis 16, dadurch gekennzeichnet, daß im Augenblick seines Speicherns in der FAH der Punkt y im Markierbild und/oder Endbild ein Etikett erhält, das identisch ist mit dem einem Etikett, das x in diesem Markierbild und/oder Endbild zugeordnet wurde.

18. Verfahren nach einem der Ansprüche 1 bis 17, dadurch gekennzeichnet, daß im Augenblick seines Verlassens der FAH der Punkt x im Markierbild und/oder Endbild ein Etikett erhält, das auf folgende Weise bestimmt wird:
    - Wenn Punkt x zu zwei Bereichen benachbart ist, die im Bild verschiedene Etiketten haben, erhält er ein Grenzpunkt-Etikett und der Verarbeitungsschritt 1 beginnt für den nächsten Punkt in der FAH;
    - Wenn Punkt x nur zu einem markierten Nachbarbereich benachbart ist, erhält Punkt x das Etikett dieses Bereichs.

19. Verfahren nach einem der Ansprüche 1 bis 16, dadurch gekennzeichnet, daß im Augenblick seines Speicherns in der FAH während der Verarbeitungsphase ein Punkt ein Etikett erhält, das anzeigt, daß er in der FAH gespeichert wurde, und daß er im Augenblick des Verlassens der FAH ein anderes Etikett erhält, das anzeigt, daß dieser Punkt die FAH verlassen hat.

20. Verfahren nach einem der Ansprüche 1 bis 16 oder 19, dadurch gekennzeichnet, daß bei jedem Punkt x, der die FAH verläßt und noch kein spezielles Etikett für Punkte, die die FAH verlassen haben, besitzt, die folgende Verarbeitung auf jeden Nachbarpunkt y von x angewendet wird, der im Markierbild noch kein Etikett besitzt:
    a) es geht eine Variable V in Abhängigkeit von den Bildvektoren in x und in y ein,
    b) Punkt y wird mit einer Priorität V in der FAH gespeichert,
    c) und y erhält als Endwert im Endbild den Wert V.

21. Verfahren nach Anspruch 20, dadurch gekennzeichnet, daß die Variable V als Wert aufweist:
    V = Max (Fx oder Py), wobei Fx einen Wert einer Filmfunktion des Punkts x darstellt und Py einen physischen Wert des Nachbarpunkts y darstellt.

**Claims**

1. A method for processing an image stored in a memory (500) containing at each address (fig. 1:xyzt; fig.. 3, 4, 5: abc...) the physical value (12) of an image point and a tag label associated with this point to obtain thereby a physical image and a tag image, this method comprising an initialisation phase and a processing phase with the aim of constructing a visual image, during which:
   in the initialisation phase
   - a group of queue files (14-19), or FAH, arranged in hierarchy is created, the queue files being of the first-in, first-out type, and being differentiated from each other by their correspondence to one value among possible values of a priority parameter,
   - a search is carried out in the memory for the physical image and/or tag image of points that trigger the method,
   - a priority level is evaluated for each trigger point depending on the physical values or tag labels of this point and its adjacent points in an image window,
   - the address of each trigger point is assigned to a queue file corresponding to the value of its level of priority,
   in the processing phase, steps 1 and 2 are repeated until the FAH is empty:
   - step 1: the address of the highest priority point in the highest priority queue file is extracted during processing, this point being x,
   - step 2: for each point y adjacent to x that has still not been stored in the FAH during the processing phase, picked up by a list containing the points adjacent to x, the priority level of y is evaluated in accordance with the physical values of the points in the x image window, the address of y is stored in the FAH corresponding to this priority level and x is given a label in the memory of the tag image and/or visual image, this label being dependent on the labels of the points in its window.

2. A method in accordance with claim 1, characterised in that, at the moment when it is to be placed in the FAH, the value of a physical parameter that will be used as a priority parameter is calculated for each point t.

3. A method in accordance with claim 2, characterised in that the value of the physical parameter is evaluated by calculating a distance between the point t and a tagged adjacent area R.

4. A method in accordance with claim 3, characterised in that the distance is calculated by measuring the shortest distance between the colour of t and the colour of a point adjacent to t in the region R having the colour closest to t.

5. A method in accordance with claim 3 or claim 4, characterised in that the average colour of all the points making up a region adjacent to t is calculated and in that the distance is calculated by working out the distance from the colour of point t to this average colour.

6. A method in accordance with any one of claims 3 to 5, characterised in that a fixed reference colour is defined for each region and in that the distance is calculated by working out the distance of the colour of the point t from this reference colour.

7. A method in accordance with any one of claims 1 to 6, characterised in that the trigger points are picked up on the basis of being those which belong to one tag and have adjacent to them a point that does not belong to this tag.

8. A method in accordance with any one of claims 1 to 6, characterised in that the trigger points are picked up on the basis of being those which are outside a tag and are adjacent to a tagged point.

9. A method in accordance with any one of claims 1 to 8, characterised in that each address of the trigger image points is filed in a queue file in relation to a conventional initialisation value.

10. A method in accordance with any one of claims 1 to 9, characterised in that
    - a priority queue file is deleted from the group of queue files when the addresses of image points that it contained have been removed from it,
    - the address of image points selected subsequently to this deletion, which should have been filed in this deleted queue file, are filed in the queue file having the highest existing priority after the rank of this deleted queue file.

11. A method in accordance with any one of claims 1 to 9, characterised in that
    - a priority queue file is deleted from the group of queue files when the image point addresses that it contained have been removed from it,
    and in that
    - the image point addresses selected subsequently to this deletion, that should have been filed in this deleted queue file are filed in a special queue file with a higher priority rank than all the other queue files at a given moment during processing, so that these emergency situations may be handled.

12. A method in accordance with any one of claims 1 to 11, characterised in that the priority level of y is calculated by working out the gradient of a physical dimension measured in a body and assigned to an image point corresponding to y at the point of the body at which this measurement is taken.

13. A method in accordance with any one of claims 1 to 12, characterised in that the priority level of y is evaluated by
    - working out in accordance with a mathematical algorithm an image parameter representing an image window of this point.

14. A method in accordance with any one of claims 1 to 13, characterised in that to select image points y adjacent to a point x,
    - all the image points are selected in which at least one of the terms of the address differs by one unit from the corresponding term of the address of the point x.

15. A method in accordance with any one of claims 1 to 14, characterised in that to select the image points y adjacent to a point x,
    - all the image points are selected in which at least one of the terms of the address differs by two units at most from the corresponding term of the address of the point x.

16. A method in accordance with any one of claims 1 to 14, characterised in that to select the image points y adjacent to a point x
    - all the image points are selected which belong to a list attached to the point x.

17. A method in accordance with any one of claims 1 to 16, characterised in that at the moment it is stored in the FAH, y receives in the tag image and/or visual image a label identical to a label that has been assigned to x in this tag image and/or visual image.

18. A method in accordance with any one of claims 1 to 17, characterised in that at the moment it is extracted from the FAH, x receives in the tag image and/or visual image a label determined in the following manner:
    - if the point x is adjacent to two regions having different labels in the image, it is given a border point label and step 1 is recommenced for the next point in the FAH;
    - if the point x is adjacent to a single region tagged as being an adjacent region, the label of this region is given to the point x.

19. A method in accordance with any one of claims 1 to 16, characterised in that at the moment it is stored in the FAH, during the processing phase, a point receives a label indicating that it has been stored in the FAH and, that at the moment it exits the FAH, it receives another label indicating that this point has left the FAH.

20. A method in accordance with any one of claims 1 to 16 or 19, characterised in that for any point x exiting the FAH and still not having a label characteristic of the points that have left the FAH, each point y adjacent to x that still does not have a label in the tag image is processed as follows:
a) a variable V based on the image vectors in x and in y is considered,
b) the point y is stored with a priority V in the FAH,
c) and y is assigned the value V in the visual image as a result value.

21. A method in accordance with claim 20, characterised in that the variable V has a value of:
V = Max (Fx or Py) in which Fx is a value of a film characteristic at the point x, Py is a physical value at the adjacent point y.

FIG_1

# FIG_2-a

# FIG_2-b

# FIG_3a

IMAGE SOURCE
a b c d e f g h i j k l m n o p

IMAGE MARQUEUR
a b c d e f g h i j k l m n o p

FAH

# FIG_3b

IMAGE SOURCE
a b c d e f g h i j k l m n o p

IMAGE MARQUEUR
a b c d e f g h i j k l m n o p

FAH

# FIG_3c

IMAGE SOURCE
a b c d e f g h i j k l m n o p

IMAGE MARQUEUR
a b c d e f g h i j k l m n o p

FAH

# FIG_3d

IMAGE SOURCE
a b c d e f g h i j k l m n o p

IMAGE MARQUEUR
a b c d e f g h i j k l m n o p

FAH

# FIG_3e

IMAGE SOURCE
a b c d e f g h i j k l m n o p

IMAGE MARQUEUR
a b c d e f g h i j k l m n o p

FAH

# FIG_3f

IMAGE SOURCE
a b c d e f g h i j k l m n o p

IMAGE MARQUEUR
a b c d e f g h i j k l m n o p

FAH

# FIG_3g

IMAGE SOURCE
a b c d e f g h i j k l m n o p

IMAGE MARQUEUR
a b c d e f g h i j k l m n o p

FAH

# FIG_3h

IMAGE SOURCE
a b c d e f g h i j k l m n o p

IMAGE MARQUEUR
a b c d e f g h i j k l m n o p

FAH

Rouge — FIG_4a

Vert — FIG_4b

Bleu — FIG_4c

IMAGE SOURCE VECTORIELLE

FIG_4d — IMAGE MARQUEUR

FIG_4e

FIG_4f

FIG_4g

FIG_4h

FIG_4i

FIG_4j

FIG_4k

FIG_4l

EP 0 576 584 B1

# FIG_5a

MINIMAS REGIONAUX

# FIG_5b

IMAGE MARQUEUR

# FIG_5c

IMAGE MARQUEUR

# FIG_5d

IMAGE MARQUEUR

# FIG_5e

IMAGE MARQUEUR

# FIG_5f

IMAGE MARQUEUR

# FIG_5g

IMAGE MARQUEUR

# FIG_5h

IMAGE MARQUEUR